# EUROPEAN PATENT SPECIFICATION

(11) **EP 2 940 946 B1**
(45) Date of publication and mention of the grant of the patent: **05.06.2019**
(21) Application number: 14290129.7
(22) Date of filing: 30.04.2014
(51) Int. Cl.: H04L 12/721, H04L 12/733

(54) **Method for operating a communication network**
Verfahren zum Betreiben eines Kommunikationsnetzes
Procédé pour faire fonctionner un réseau de communication

(43) Date of publication of application: 04.11.2015
(73) Proprietor: Alcatel Lucent, 91620 Nozay (FR)
(72) Inventor: Ansorge, Stefan, 70435 Stuttgart (DE)
(74) Representative: DREISS Patentanwälte PartG mbB

(56) References cited:
- EP-A1- 1 601 143
- US-A1- 2004 022 194
- US-A1- 2007 253 403
- US-B1- 7 633 940
- DAEHO SEO ET AL: "Near-Optimal Worst-Case Throughput Routing for Two-Dimensional Mesh Networks", COMPUTER ARCHITECTURE, 2005. ISCA '05. PROCEEDINGS. 32ND INTERNATIONAL SYMPOSIUM ON MADISON, WI, USA 04-08 JUNE 2005, PISCATAWAY, NJ, USA,IEEE, 4 June 2005 (2005-06-04), pages 432-443, XP010807925, DOI: 10.1109/ISCA.2005.37 ISBN: 978-0-7695-2270-8
- NESSON T ET AL: "ROMM ROUTING ON MESH AND TORUS METWORKS", 7TH.ANNUAL ACM SYMPOSIUM ON PARALLEL ALGORITHMS AND ARCHITECTURES. SPAA '95. SANTA BARBARA, JULY 17 - 19, 1995; [ANNUAL ACM SYMPOSIUM ON PARALLEL ALGORITHMS AND ARCHITECTURES. (SPAA)], NEW YORK, ACM, US, vol. SYMP. 6, 17 July 1995 (1995-07-17), pages 275-287, XP000659899, DOI: 10.1145/215399.215455 ISBN: 978-0-89791-717-9

## Description

### Field of the invention

The invention relates to a method for operating a communication network.

### Background

The determination of shortest or cheapest paths or routes through complex communication networks comprising for example different layers and/or network nodes with special capabilities is a crucial aspect for establishing and administration of connections for communication between two or more nodes.

US 2007/0253403 A1 proposes a two-phase routing scheme which does not require the network to detect changes in the traffic distribution or to reconfigure the network in response to such changes. The only assumptions about the traffic that are made are the limits imposed by the ingress-egress constraints at each node. In phase 1, a predetermined fraction of the traffic entering the network at any node is distributed to every node, independent of the final destination of the traffic. In phase 2, as a result of the routing in phase 1, each node receives traffic destined for different destinations and routes the traffic to its respective destinations.

EP 1 601 143 A1 proposes a method of routing data through a network of nodes interconnected by links and having at least one ingress point and at least one egress point, comprising the steps of: receiving a request for a path with a service demand for routing data between the ingress point and the egress point; selecting a set of one or more intermediate nodes between the ingress point and the egress point; determining, based on a bandwidth of said network, respective fractions of the data to send from the ingress point to each node of the set of one or more intermediate nodes; routing the data in the determined respective fractions from the ingress point to each node of the set of one or more intermediate nodes; and routing the data from each node of the set of one or more intermediate nodes to the egress point.

### Summary

In view of the prior art, it is an object of the disclosure to improve the determination of communication paths through a communication network. According to the independent claims, an open path is determined in a first determination step and a reaching path is determined in a second determination step. This allows a hierarchical computation and composition of a
feasible communication path along the open path and along the reaching path to transfer payload data between two respective nodes. Especially dedicated nodes can be incorporated into the communication paths according to their respective capabilities by conducting the proposed method. Moreover, the method provides to find the shortest and/or cheapest path through the communication network.

### Brief description of the figures

Further features, aspects and advantages of the present invention are given in the following detailed description with reference to the drawings in which:
- Figure 1: schematic block diagram for operating a communication network;
- Figure 2a: shows a schematic optical network;
- Figure 2b: shows an open tree in schematic form;
- Figure 2c: shows a further determination step;
- Figure 2d: shows tree feasible reaching paths;
- Figure 3a: shows a further schematic optical network;
- Figure 3b: shows an open tree;
- Figure 3c: shows a reaching path;
- Figure 4: shows a further schematic communication network;
- Figure 5: shows a further schematic communication network; and
- Figure 6: shows shortest paths and a communication path in the network of figure 5.

### Description of the embodiments

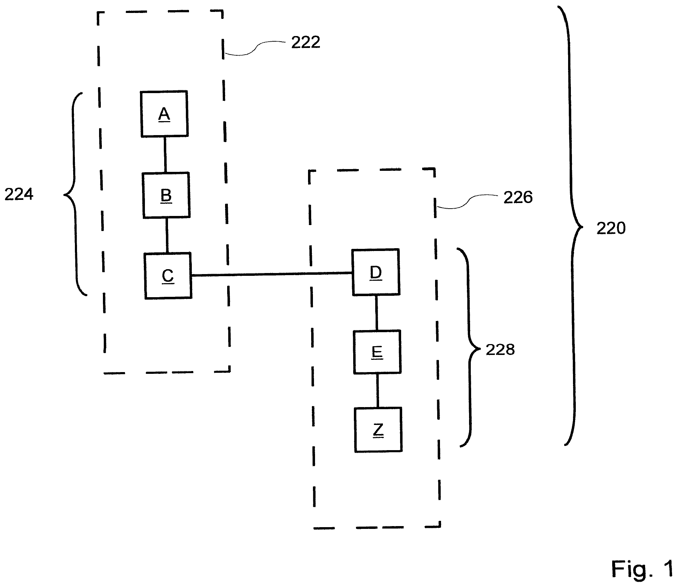

Figure 1 shows a schematic block diagram for operating a communication network with.a first node A, a second node Z and intermediate nodes B to E. A communication path 220 has to be established from the first node A to the second node Z along other nodes. The first node A is connected via the plurality of intermediate nodes B to E with the second node Z.

In a first determination step 222 an open path 224 is determined starting with the first node A as a source node and the node C as an end node with the intermediate node B. The open path 224 does not comprise the second node Z as a destination node, as there is a margin that cannot be crossed. This margin may comprise a constraint like a power level constraint, an optical signal to noise ratio (OSNR) or even that there is no end to end route topology possible. So, the open path 224 may not comprise the second node Z as a destination node due to at least one constraint.

In an exemplary embodiment a server layer path to transitional client links are added to a client layer path. The client layer continues and may call subsequent server layer paths when a transition to the server layer is detected.

In a second determination step 226 a reaching path 228 is determined starting the intermediate node C in the open path 224 as a source node. The reaching path 228 comprises the second node Z as a destination node and the intermediate nodes D and E.

The communication path 220 from the first node A to the second node Z is determined along intermediate nodes B-E on the open path 224 and on the reaching path 228. The first and second paths 224 and 228 are stitched together to build a route from the first node A to the destination node Z through the network. This stitched route is established along the nodes A to Z and payload data is transferred from the first node A to the second node Z and/or vice versa along the communication path 220. The terms path and route may be used in the context of this application interchangeably.

Table 2 provides the function route in pseudo-code, wherein the pseudo-code is not intended to provide code ready to be compiled and executed. Table 2 is merely intended to show the solution according to this disclosure.

Line 1 of table 2 provides the name of the function, namely route, and the return pointer DISTANCE *, which points to a variable in which resides the result the function route returns, namely a list of nodes processed with their result. Furthermore line 1 provides the input variable from, which is the first node A to start the path. In this disclosure the wording path is equivalent with the wording route. Line 2 provides the input variable to, which is the second node Z, the desired destination of the path. Line 3 provides the variable tech to the function route, which is used as a layer indication which layer is requested. The route request operates only in its requested layer/technology. A server layer route can be requested by client layer but cannot be requested from server layer. Line 6 provides a graph W, which is a graph or a two-dimensional list of size n x n for representing the communication network in the form [from node, to node]. At least one metric in W is linked with a connection/link between two nodes, wherein for unused links or links that do not exist the metric is a maximum value, for example max_length which provides the maximum length or cost between two nodes. In line 8 the maximum number of nodes n is provided to process the n*n field. In line 9 the variable MAX_BUDGET is provided to the function route, wherein MAX_BUDGET is a constraint for the metric budget, the constraint representing a margin. In line 7 it is provided the variable cycle which is set to 0 at the client layer and to 1 in any server layer. A server layer shall never call client or other server layer to avoid endless recursion. Furthermore a pointer *r_route is provided for storing the calculated path at the memory address of the pointer *r_route.

With respect to this disclosure, the term constraint may refer to a layer specific constraint such as optical reach budget but may also refer to a network wide, layer independent constraint such as latency from the first to the second node.

The function route is divided into a first update step in lines 10 to 76 and a second update step in lines 77 to 116, which are executed in a sequence for each node according to line 9. At the start of the function route, the array or one-dimensional list P has the value zero for each node, which means that the node has not yet been visited by the function. This value zero for a node means that the node is labelled tentatively or not known. If the value is not zero the respective node is labelled permanent or known, which means that the function route has visited the respective node. Furthermore, the array P provides these two states tentatively labelled and permanent labelled not only for each node but also for at least two metrics, for example weight and budget as shown in lines 17 and 18.

In line 9 a loop for all potential nodes in the network is prescribed. In lines 10 to 14 it is looked for the next node that is not yet known (P[x]=0) but has the least weight (D[x,y]). The least link in the routing graph is taken for next processing. The procedure repeats until a route is found and there is no cheaper possible route (shortest route), or no more links for processing (failed).

According to line 9 and the respective two update steps, the first and second update steps are executed until all nodes A-Z are labelled permanent for at least one of the first metric weight and the second metric budget. According to lines 1 and 10 to 19 the first node is selected as the working node last_P. In lines 10 to 19 a working node last_P is selected according to the first metric weight. For selecting the working node last_P a cost, which is represented by D[j].weight from the node j to the first node, is compared with the current least distance least_D. Furthermore, only nodes that are tentatively labelled, by evaluating the statement P[j].weight == 0, are considered. The result of the lines 10 to 19 is the determination of the node next_P which has the least cost according to the first metric weight to the first node. In line 17 the node j, next_P or last_P is labelled permanent for the first metric weight meaning that the respective node is reached by that last node. The respective path can be overwritten by better routes.

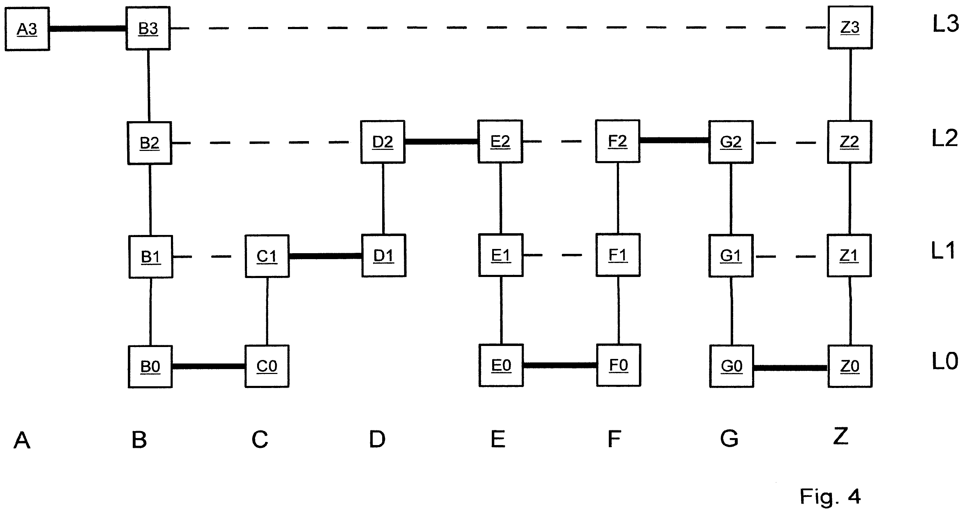

Lines 20 to 45 are referred to as a second or further determination step which can be repeated in a recursive fashion for each open path or each node on the open path. Each such repetition or recursion determines a respective further open path until determining the reaching path. This way multiple open paths may be determined in the form of intermediate paths between the first open path and the reaching path. In line 20 it is checked whether the working node last_P is a transitional link to the server layer, like it is done at a 3R node in the present code example. A 3R node recovers the optical signal by reamplification, reshaping and retiming of the received optical signal to establish a new optical signal based on the received optical signal for transmitting. Of course, a 3R node is only an example of a dedicated node as shown in figure 4.

Lines 22 to 29 determine a further or reaching path r_pred with the working node last_P as the source node. The first and/or second constraint MAX_BUDGET is related to a node cost and/or link costs according to a metric, for example weight or budget), wherein the first and/or second constraint MAX_BUDGET delimit a total cost which relates to a composition of the node costs and/or link costs along the respective path. The constraint MAX_BUDGET represents a margin valid for a respective layer.

Line 30 to 42 updates the routing graph pred from client layer with the result r_pred of the server layer. Only new or better hops than already known are added to the client layer routing graph.

In line 30 each node o is visited. According to line 32 the visited node o has to be marked tentatively to continue with line 36. It is determined in lines 33 and 34 whether the cost D[o].weight according to the metric weight from the visited node o to the first node from is greater than the sum of the cost D[last_P] .weight according to the metric weight from the working node last_P to the first node from and the cost result[o].weight according to the metric weight through the further path &r_pred from the visited node o to the working node last_P. In lines 36 to 40 the costs D[o].weight and D[o].budget of the respective metric weight and budge for the visited node o are determined as a respective sum of the cost D[last_P].weight or D[last_P] .budget) from the working node last_P to the first node from and the respective cost result [o].weight or result [o] .budget from the visited node (o) to the working node last_P including 3R cost / server layer cost. In line 41 the working node last_P from the client layer is stored as a predecessor for the visited node o and in line 42 the further path r_pred is stored for the respective adjacent node o, therefore storing the route of the server layer between the node and the last client layer node stored in line 41.

At lines 46 to 57 it is checked for the new processed node determined in lines 10 to 16 and it is checked for links to the next adjacent nodes. It is checked whether the next adjacent nodes are already processed, provide a better route and whether the constraints match. If everything matches, the respective node is added to the result graph. In line 47 it is determined whether a new node was yet processed.

In lines 48/49 it is determined whether a new route is better than the present route. In line 50 it is determined whether the link supports the requested layer technology. In lines 51/52 it is determined if the present constraint and the new link constraint are still in the respective limit range. In lines 53 to 57 it is checked whether additional constraints, for example restricted connectivity, wavelength continuity match.

In line 47 it is checked whether the adjacent node k is labeled tentatively for the first metric weight. The statement in lines 48 and 49 is: the first cost D[k] .weight of the adjacent node k is greater than the sum of the first cost D[last_P].weight from the first node to the working node last_P according to the first metric weight and the first cost W[last_P][k].weight) between the working node last_P and the adjacent node k according to the first metric weight, meaning the new metric is better than the present. The statement in lines 50 and 91 is: the link between the working node last_P and the adjacent node k supports a required technology tech. The statement in lines 51, 52 and 92, 93 is: a constraint MAX_BUDGET for the second metric budget is greater than or equal the sum of the second or fourth cost D[last_P].budget,
D[last_P].budget_b of the working node last_P and the cost W[last_P][k].budget between the working node last_P and the adjacent node k according to the second metric budget, meaning: is the budget of the new route in the permitted range. The statement in lines 53 to 55 and 94 to 96 is: no restricted connectivity. The statement in lines 56, 57 and 97, 98 is: the path from the first node to the working node last_P and the link between the working node last_P and the adjacent node k provide the same wavelength. The field W[][].restConn is in its simplest form a binary value allowing or not allowing to route data from a respective input to a respective output of a node and represents a further constraint. A value of W[][].restConn of zero means no constraint, different to zero that there is a given predecessor node.

Lines 59 to 64 update a new path entry vector metric, budget and wavelength with the metric of the previous entry added with the values of the new one.

The first update step comprises in lines 59 and 60, that a first cost D[k].weight according to the first metric weight is determined for the adjacent node by summing the first cost D[last_P] .weight from the working node last_P to the first node and the cost W[last_P] [k].weight according to the first metric weight from the working node last_P to the adjacent node k. The first update step further comprises in line 61 that a second cost D[k].budget according to the second metric budget is determined by summing the second cost D[last_P].budget from the working node last_P to the first node and the cost W[last_P][k].budget according to the second metric budget from the working node last_P to the adjacent node k. In line 63 a fifth cost D[k].wavelength according to a third metric wavelength is set to the logical AND-operation of D[last_P].wavelength and W[last_P][k].wavelength. In line 65 the working node last_P is determined as a first predecessor pred[k].pred for the adjacent node k.

Cost may be a multi-dimensional, multi-fold vector. For each optimization constraint a respective sub-vector is used. Constraints are for example link metric, budget, latency, etc. Each sub-vector carries multi-fold contribution and values needed, for each optimization constraint as well as additional constraints such as wavelength. If optimization is done for cost weight and budget we have two sub-vectors, for weight and budget. In the present code example according to table 1 this difference is marked by no extension for metric optimized values and by the _b extension for budget optimized values. Of course, this difference can be embodied by other definitions.

In line 68 the second cost D[k].budget is compared with the fourth cost D[k].budget_b, therefore evaluating a hop found by metric optimization for budget evaluation whether it is better than a route for budget; if so, the sub-vector for budget optimization of this hop is updated. The comparison in line 68 comprises the evaluation of the statement: the fourth cost D[k].budget is greater than the second cost D[k].budget_b. In line 69 the value of the third cost D[k].weight_b is set to the value of the first cost D[k].weight. In line 70 the value of the fourth cost D[k].budget_b is set to the value of the second cost D[k].budget. In line 72 the working node last_P is set as the second predecessor pred[k].pred_b for the adjacent node k.

An update of the third cost of the first metric weight in line 69 is executed depending on a comparison of the second and fourth cost of the second metric budget in line 68. The lines 68 and 69 therefore constitute an interlacing of the first metric and the second metric in the first update step.

In lines 77 to 79 it is looked for the next best node for budget optimization.

In lines 77 to 86 a node from a set of at least one, for the second metric budget tentatively labeled nodes with the cheapest second metric budget is selected as the new working node last_P. For selecting the new working node last_P a cost, which is represented by D[j].budget from the node j to the first node, is compared with the current least distance least_D. Furthermore, only nodes that are tentatively labelled, by evaluating the statement P[j].budget == 0, are considered. The result of the lines 77 to 86 is the determination of the node next P which has the least cost according to the second metric budget to the first node. In line 85 the node j, next_P or last_P is labelled permanent for the first metric weight. In the subsequent lines it is operated on the budget optimized sub-vector looking whether any of the next nodes can be added. The lines 46 to 76 on the other side optimize for weight/metric.

In lines 89, 90 the statement is: the fourth cost D[k].budget_b of the adjacent node k is greater than the sum of the fourth cost D[last_P].budget_b from the first node to the working node last_P according to the second metric budget and the cost W[last_P] [k].budget between the working node last_P and the adjacent node k according to the second metric budget.

The second update step comprises in line 100 that a third cost D[k].weight_b according to the first metric weight is determined. The first update step further comprises in line 102 that a fourth cost D[k].budget_b according to the second metric budget is determined.

In line 106 the working node last_P is determined as a second predecessor pred[k].pred_b for the adjacent node k.

Line 107 evaluates a hop found by budget optimization for weight evaluation whether it is better than a route for weight. If so, an update of the sub-vector for weight optimization is done for this hop. In line 107 a comparison of the first cost D[k].weight and the third cost D[k].weight_b is done. The comparison in line 107 comprises the evaluation of the statement: the first cost D[k].weight is greater than the third cost D[k].weight_b. The second update step comprises in line 108 setting the value of the first cost D[k].weight to the value of the third cost D[k].weight_b. In line 109 the value of the second cost D[k].budget is set to the value of the fourth cost D[k].budget_b. In line 111 the working node last_P is determined as the first predecessor pred[k].pred for the adjacent node k.

An update of the second cost of the second metric budget in line 109 is executed depending on a comparison of the first and third cost of the first metric weight in line 107. The lines 107 and 109 therefore constitute an interlacing of the first metric and the second metric in the second update step.

**Table 1**

| | |
|---|---|
| **1** | DISTANCE * route (from, |
| **2** | to, |
| **3** | tech, |
| **4** | W, |
| **5** | n, |
| **6** | MAX_BUDGET, |
| **7** | cycle, |
| **8** | *r_route) { |
| **9** | for (i = 1; i < n; i++) { |
| **10** | least_D = 1 + n * max_length; |
| **11** | for (j = 1; j <= n ; j++) { |
| **12** | if(P[j].weight == 0 && D[j].weight < least_D){ |
| **13** | least_D = D[j]. weight; |
| **14** | next_P = j; |
| **15** | } |
| **16** | } |
| **17** | P[next_P].weight = from; |
| **18** | |
| **19** | last_P = next_P; |
| **20** | if ( ( last_P == 3Rnode) && |
| **21** | ( cycle < 1) ) { |
| **22** | result = route ( last_P, |
| **23** | to, |
| **24** | tech, |
| **25** | W, |
| **26** | n, |
| **27** | MAX_BUDGET, |
| **28** | cycle+1, |
| **29** | &r_pred); |
| **30** | for (o = 1; o <= n; o++) { |
| **31** | if ( |
| **32** | P[o].weight == 0 && |
| | W[last_P] [k] .iscd & tech) != 0 ) && |
| **33** | D[last_P].weight + result[o].weight + |
| | server_layer_cost < |
| **34** | D[o].weight ) |
| **35** | { |
| **36** | D[o].weight = D[last_P].weight + |
| **37** | result[o].weight + server_layer_cost; |
| **38** | D[o].budget = D[last_P].budget + |
| **39** | result[o].budget; |
| **40** | D[o].wavelength = result[o].wavelength; |
| **41** | pred[o].pred = last_P; |
| **42** | pred[o].route = r_pred; |
| **43** | } |
| **44** | } |
| **45** | } |
| **46** | for (k = 1 ; k <= n; k++) { |
| **47** | if ( P[k].weight == 0 && |
| **48** | ( D[last_P].weight+ W[last_P] [k].weight < |
| **49** | D[k].weight ) && |
| **50** | ( ( W[last_P] [k].iscd & tech) != 0 ) && |
| **51** | ( D[last_P].budget+ W[last_P][k].budget < |
| **52** | MAX_BUDGET) && |
| **53** | ( ( W[last_P][k].restConn == 0 ) \|\| |
| **54** | ( W[last_P][k].restConn == |
| **55** | pred[last_P].pred) ) && |
| **56** | ( ( D[last_P].wavelength & |
| **57** | W[last_P][k] . wavelength) != 0 ) ) |
| **58** | { |
| **59** | D[k].weight = D[last_P].weight + |
| **60** | W[last_P] [k] .weight; |
| **61** | D[k].budget = D[last_P].budget + |
| **62** | W[last_P][k] .budget; |
| **63** | D[k].wavelength = D[last_P].wavelength & |
| **64** | W[last_P][k].wavelength; |
| **65** | pred[k].pred = last_P; |
| **66** | if ( W[last_P] [k] .weight == 100) |
| **67** | D[k].budget = 0; |
| **68** | if ( D[k].budget < D[k].budget_b) { |
| **69** | D[k].weight_b = D[k].weight; |
| **70** | D[k].budget_b = D[k].budget; |
| **71** | D[k].wavelength_b = D[k].wavelength; |
| **72** | pred[k].pred_b = pred[k].pred; |
| **73** | pred[k].route_b = pred; |
| **74** | } |
| **75** | } |
| **76** | } |
| **77** | least_D = 1+5* MAX_BUDGET; |
| **78** | for (j = 1 ; j <= n ; j++) { |
| **79** | if (P[j].budget == 0 && D[j].budget < least_D) |
| **80** | { |
| **81** | least_D = D[j].budget; |
| **82** | next_P = j; |
| **83** | } |
| **84** | } |
| **85** | P[next_P].budget= from; |
| **86** | last_P = next_P; |
| **87** | for (k = 1 ; k <= n; k++) { |
| **88** | if ( P[k].budget == 0 && |
| **89** | ( D[last_P].budget_b + W[last_P][k].budget < |
| **90** | D[k].budget_b ) && |
| **91** | ( ( W[last_P] [k] . iscd & tech) != 0) && |
| **92** | ( D[last_P].budget_b+ W[last_P][k].budget |
| **93** | < MAX_BUDGET) && |
| **94** | ( ( W[last_P] [k].restConn == 0) \|\| |
| **95** | ( W[last_P][k].restConn === |
| **96** | pred[last_P] . pred_b ) ) && |
| **97** | ( ( D[last_P] . wavelength_b & |
| **98** | W[last_P] [k] .wavelength) != 0 ) ) |
| **99** | { |
| **100** | D[k].weight_b = D[last_P].weight_b + |
| **101** | W[last_P] [k].weight; |
| **102** | D[k].budget_b = D[last_P].budget_b + |
| **103** | W[last_P] [k].budget; |
| **104** | D[k].wavelength_b = D[last_P].wavelength_b & |
| **105** | W[last_P][k].wavelength; |
| **106** | pred[k].pred_b = last_P; |
| **107** | if ( D[k].weight_b < D[k] .weight) { |
| **108** | D[k].weight = D[k].weight_b; |
| **109** | D[k].budget = D[k].budget_b; |
| **110** | D[k].wavelength = D[k].wavelength_b; |
| **111** | pred[k].pred = pred[k].pred_b; |
| **112** | pred[k].route = pred; |
| **113** | } |
| **114** | } |
| **115** | } |
| **116** | } |
| **117** | *r_route = pred; |
| **118** | return (D ); |
| **119** | } |
| **120** | |

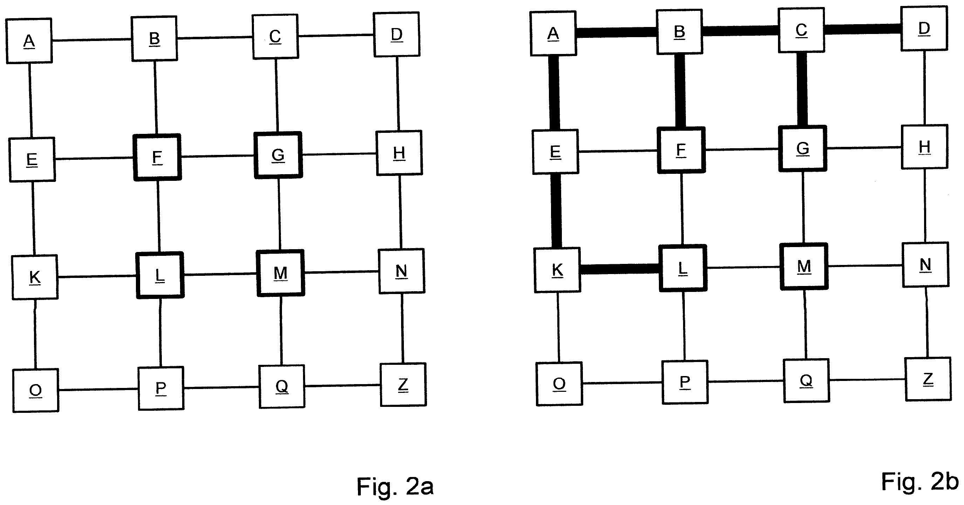

Figure 2a shows a schematic optical network with the first node A, the second node Z and intermediate nodes B to Q. A path request determines the first node A as the source node and the second node Z as the destination node. The nodes F, G, L and M are 3R capable nodes.

Figure 2b shows an open tree with open paths A-E-K-L, A-B-F, A-B-C-G, A-B-C-D, wherein the open paths are determined according to the first determination step. A first constraint, e.g. weight or budget, terminates the respective open paths. The open tree shows that the second node Z is not reached. The first constraint in this example is the maximum of three hops, wherein the signal has to be regenerated at the third hop. Node A can reach three 3R nodes, namely F, L and G.

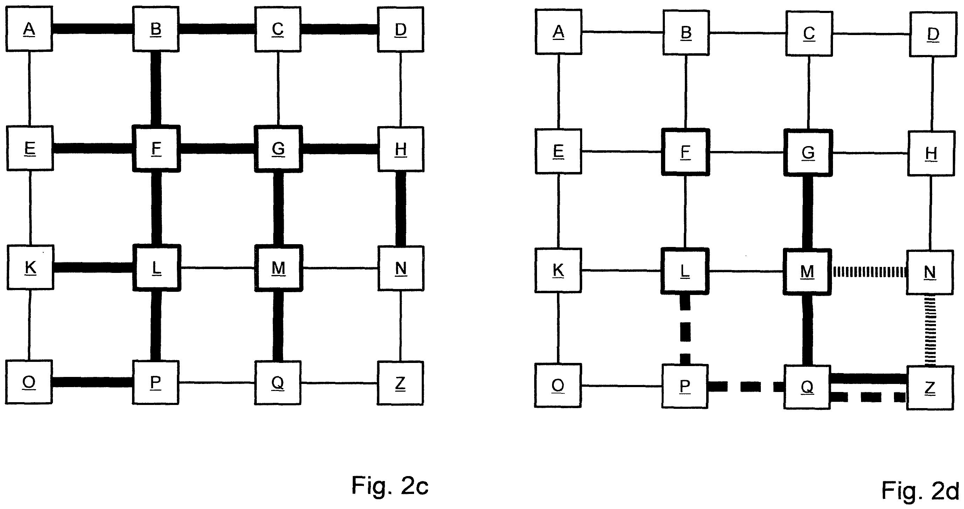

Figure 2c shows a further determination step starting from node F. The calculation of a further tree comprises further paths F-E, F-B-A, F-B-C-D, F-G-H-N, F-L-K, F-L-P-O, F-G-M-Q starting from the intermediate dedicated node F as a source node. The shown open paths do not reach the second node Z.

From node F the 3R node M can be reached. New nodes are added to the original graph of A, here H, N, N, P, Q with F as a predecessor node. Similar determination steps as for node F are done for nodes L, G and M.

A 3R node is considered comprising high metric cost and metric optimization prefers as less 3R nodes as possible. An additional server layer cost is added to the metric in line 33 of the code example in table 1.

Figure 2d shows three feasible reaching paths L-P-Q-Z with a metric of three links, G-M-Q-Z with a metric of three links, M-N-Z with a metric of two links each reaching the second node Z. These reaching paths are determined according to the second determination step and provide together with a respective open path a path from node A to Z. The reaching paths are objected to the same constraint as the open paths, namely a maximum of three hops. Applying the same constraint in the further or second determination step is a relaxation of the first constraint to a second constraint for the whole path 214 at the dedicated node due to the 3R capability. Consequently, the second node Z can be reached via the reaching path M-N-Z for example within the second constraint which is the double of the first constraint via double 3R costs.

Returning to figure 2c, from node F three potential feasible paths via node G, K and M use a 3R capable node. As 3R capability is a further metric and considered expensive, the number of 3R nodes is preferably reduced to a minimum.

F-G links and F-L links are not processed as there is a direct route from A to L and A to G as 3R cost is added. This avoids the recursive processing on those secondary 3R points.

A further path F-G together with a reaching path G-M-Q-Z starting by a further use of the 3R capability of node G comprises 1 link to G, and three links in the reaching path. A further path F-L together with a reaching path L-P-Q-Z starting by a further use of the 3R capability of node L comprises 1 link to F, and three links in the reaching path. A further path F-G-M together with a reaching path M-Q-Z starting by a further use of the 3R capability of node F comprises two links to M, and two links in the reaching path. The preceding further paths together with its respective reaching paths have comparable costs as consuming four links and one 3R capability of one 3R capable node.

In the following it is assumed that the further path F-G-M via M is chosen. The route with 3R points A-F-M-Z is used with the budget constraint of two links maximum only.

The path from node G to the second node Z is already stored as a result with a feasible path to the second node Z according to the open path A-B-C-G, the use of the 3R capability of node G and the reaching path G-M-Q-Z. The cost of this path results in the use of one 3R resource, and a total of 6 links.

In a further step a path from the open path A-E-K-L is combined with the reaching path L-P-Q-Z, which results in the use of total six links and one 3R resource.

Three potential paths were identified: a) open path A-B-F with further path F-L and with reaching path L-P-Q-Z; b) open path A-B-C-G with reaching path G-M-Q-Z; and c) open path A-E-K-L with reaching path L-P-Q-Z. As path a) consumes two 3R resources paths b) and c) are preferred and have comparable costs. A corresponding implementation may complete a tree calculation in a recursive way, therefore completing the path a). A further implementation may follow the number of 3R resources not terminating the route calculation of path a). However, the further implementation would not allow recursive implementation.

Above path a) comprises the further open path F-L, which is determined according to a further determination step.

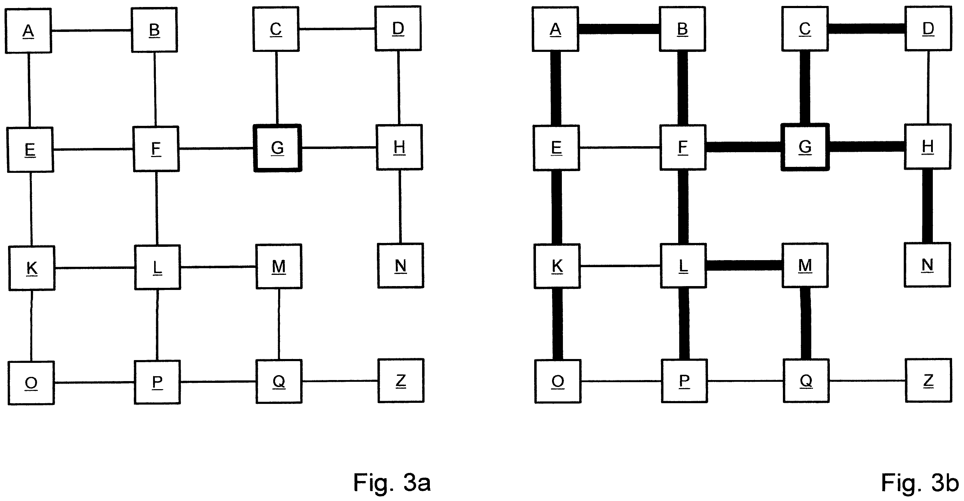

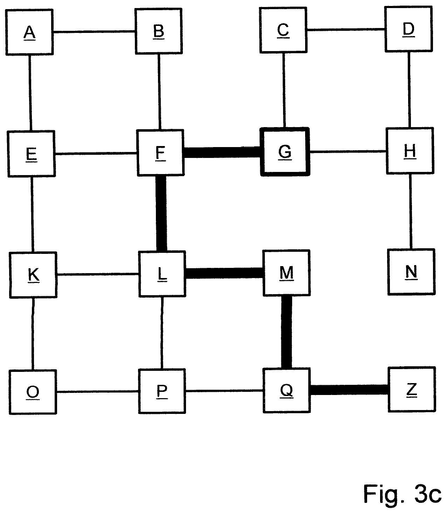

Figure 3a shows a further communication network with the nodes A to Q and Z connected in a different way than in figure 2a. Only node G provides a 3R capability. The example according to the following figures 3b and 3c allows a maximum of five hops.

Figure 3b shows an open tree with feasible open paths A-B-F-G-C-D, A-B-F-G-H-N, A-B-F-L-M-Q, A-B-F-L-P, A-E-K-O. A first constraint, namely the maximum hop number of three, terminates the first path without reaching the second node Z.

Figure 3c shows the reaching path G-F-L-M-Q-Z, in which the link between F-G is used twice in forward and reverse direction for the whole path made of the open path up to node G and the reaching path from node G to node Z. As signalling provides loop prevention, the whole path is set up in a hierarchical way. Therefore the open path from node A up to node G is established on a first level and the reaching path from node G to node Z is established on a second level.

Figure 4 shows a schematic multi-layer communication network of the first node A, the second node Z, and intermediate nodes B to G. The horizontal dotted lines are logical connections. The horizontal continuous solid lines are physical connections or links between the respective nodes. The vertical solid lines are layer transitions at a given node. As before, the first node A is the source node and the second node Z is the destination node to establish the path 216. Furthermore the nodes shown in figure 4 support different layers. For example the node B provides transmission functions B0, B1, B2 and B3 on all layers L0, L1, L2 and L3. L1 represents the client layer of L0; L0 represents the server layer of L1; the former being applicable to the layer pairs L1-L2, L2-L3. The node D on the other hand only provides transmission functions D1 and D2 on the layers L1 and L2. For illustrative purposes only the network in figure 4 only shows one path from node A to node Z. Of course, the network may comprise further nodes connected with a respective node shown on one layer. Therefore, a shortest and/or cheapest path is also determined on a respective layer L0-L3 even not shown in figure 4. The layers L0 to L3 may be layers according to the OSI/ISO model according to ITU-T X.200 (07/1994) or any rate depending layers.

The respective transmission functions may provide, horizontally, a connection on the same layer to a further node, like the transmission function D2 to E2. The respective transmission functions may also provide, vertically, a connection to the respective server and/or client layer. The transmission function B2 for example, may transmit and receive data to and from its server layer transmission function B1 and may transmit and receive data to and from its client layer transmission function B3. On the other hand the transmission function A3 does not have a transmission function on another layer as L3 on the same node A.

Each node A to Z in figure 4 which comprises at least two transmission functions on a different layer, respectively, is a dedicated node and provides a transition and transmission of data from one layer to another.

A reaching path G-Z between the transmission functions GO and ZO has a preceding open path F-G between the transmission functions F2 and G2. The first open path A-B is established between the transmission functions A3 and B3 on the layer L3.

As node B has no direct feasible link to node Z the transmission function B3 is logically connected to transmission function B2, B2 is connected to B1 and B1 is connected to B0. The transmission function B0 can establish a path to transmission function C0 of node C. The path between B0 and C0 on layer L0 establishes a logical connection between the transmission functions B1 and C1. Figure 4 therefore illustrates a multi-layer routing method according to this disclosure.

A further metric is the respective number of server layers. As the use of server layers is considered with high expenses or costs, a server layer is associated with a higher number as the respective client layer. Therefore, the method would consider to use links in the current layer or even prefer to use a transition to a respective client layer, as the client layers are considered cheaper.

In an exemplary embodiment according to a path request in layer L1 one or more paths are calculated in layer L1 as long there are pending L1 topology links. The links with transitions to layer L0 are determined. If no path reaching the destination node can be found at layer L1 at least one of the determined transitional links to layer L0 is used to get to the destination. At a transitional link to L0 a further path request is issued to get to the destination node. The resulting path is added to the calculated L1 path, if the path is new and cheaper. If the destination node is reached, no further steps have to be done. If the destination node is still not reached in the layer L0, at least one link back to the layer L1 is determined. Therefore, back in the layer L1 the path determination is continued to get to the destination node. It might be necessary to get multiple times to layer L0 and layer L1 to get to the destination node. An example is routing transparent services across a network like a TDM (Time Division Multiplex) network or a WDM (Wavelength Division Multiplexing) network as a carrier network to link the respective services together. The transition between the layers L1 and L0 is used at least for two purposes: First, within the layer L1 it is determined a gateway to the layer L0 that can be used for server layer routing; Second, within layer L0 it is determined a transition back to the client layer L1 where the client layer can continue. The resulting path in layer L0 is merged back into the path in layer L1. It is verified that no better path to the destination node in layer L1 is feasible. Therefore, new nodes and/or links are available in layer L1 to be processed. The resulting hops are added from layer L0. The procedure may be repeated for multiple hierarchies with clear hierarchy levels, e.g. L0, L1, L2, L3, wherein level L0 represents the lowest possible level.

Therefore, it is provided a method to find a shortest path in multi-layer networks across a plurality of layers.

Of course the embodiments shown in the respective figures can be combined. Especially, the methods with the open path and reaching path can be combined with the methods incorporating the first and second metrics.

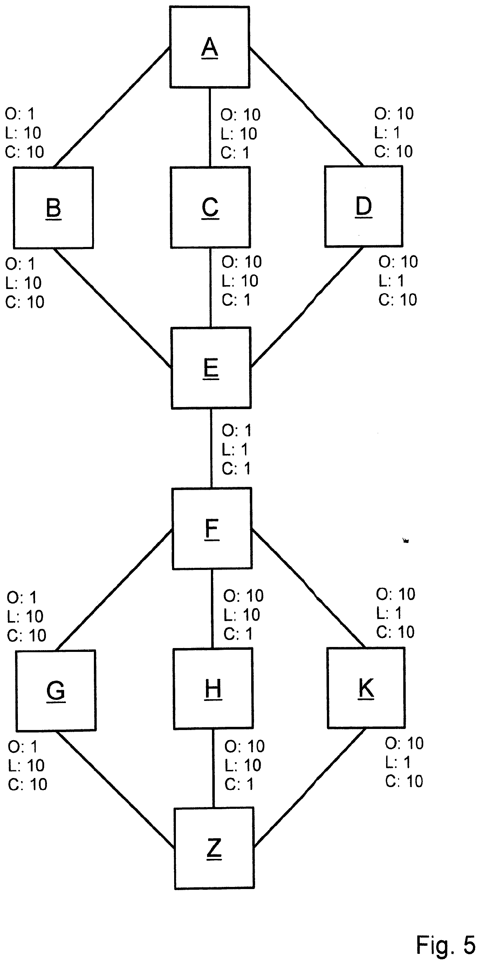

Figure 5 shows a schematic communication network with a first node A, a second node Z and intermediate nodes B to K. Three metrics are assigned to each link between the nodes A to K and Z: the optical reach 0, the latency L and the admin cost C. As smaller the numbers are, the better the respective metric.

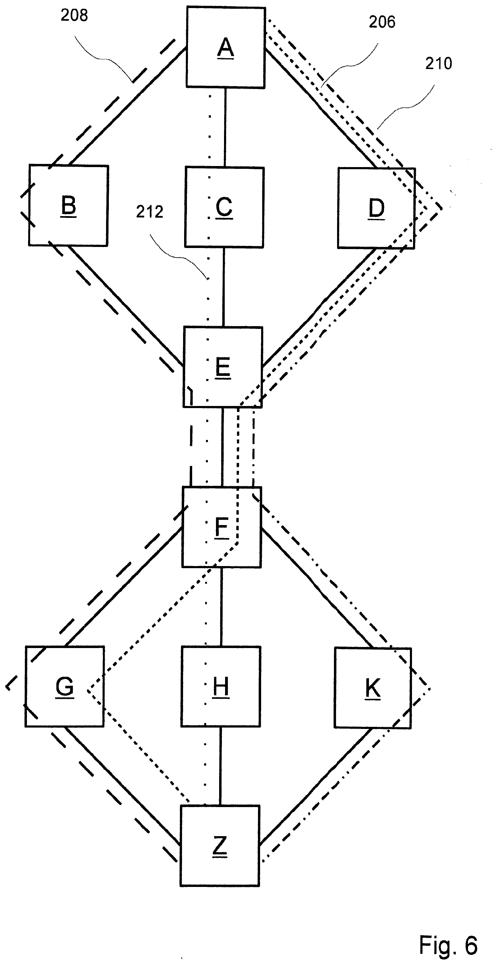

Figure 6 shows shortest paths 208, 210 and 212 from the first node A to the second node Z according to the respective metric optical reach 0, latency L and admin cost C. The communication path 206 is determined according to the present disclosure incorporating three metrics.

The following table 2 illustrates the respective steps following a request to find a path from the first node A to the second node Z. A "*" stands for a taken path or route. A "F" stands for a failed path or route. Each line of a table entry consists of optical reach, latency, metric, and accumulated values in addition to tentatively processed. Each row of a table entry consists of a value optimized for optical reach, a value optimized for metric and a value optimized for latency.

For example, the K-Z link below may comprise the following values:

| | SO | SM | SL | t |
|---|---|---|---|---|
| Optical reach optimized sub-vector | 31 | 13 | 22 | 0 |
| Metric optimized sub-vector | 13 | 31 | 22 | 1 |
| Latency optimized sub-vector | 31 | 31 | 4 | 0 |

SM is the accumulated value for summary metric. SO is the accumulated value for summary optical reach. SL is the accumulated value for summary latency. And t is the tentatively to be processed if zero for each sub-vector.

A feasible path from A to Z, in contrast to the paths 208, 210 and 212, should not pass a maximum for the latency of 25 and a maximum for the optical reach of 25.

**Table 2**

| | link | vector for optimizing for optical reach | link | vector for optimizing for cost | link | vector for optimizing for latency |
|---|---|---|---|---|---|---|
| | A-B | 10,1,10,0 | A-C | 1,10,10,0 | A-D | 10,10,1,0 |
| | | 10,1,10,0 | | 1,10,10,0 | | 10,10,1,0 |
| | | 10,1,10,0 | | 1,10,10,0 | | 10,10,1,0 |
| 1^{st} loop | A-B | 10,1,10,0 | A-C | 1,10,10,1* | A-D | 10,10,1,0 |
| | | 10,1,10,1* | | 1,10,10,0 | | 10,10,1,0 |
| | | 10,1,10,0 | | 1,10,10,0 | | 10,10,1,0 |
| | B-E | 20,2,20,0 | C-E | 2,20,20,0 | D-E | 20,20,2,0 |
| | | 20,2,20,0 | | 2,20,20,0 | | 20,20,2,0 |
| | | 20,2,20,0 | | 2,20,20,0 | | 20,20,2,0 |
| 2^{nd} loop | B-E | 20,2,20,0 | C-E | 2,20,20,1* | D-E | 20,20,2,0 |
| | | 20,2,20,1* | | 2,20,20,0 | | 20,20,2,0 |
| | | 20,2,20,0 | | 2,20,20,0 | | 20,20,2,1* |
| | E-F | 20,2,20,0 | E-F | 20,2,20,0 | E-F | 20,2,20,0 |
| | | 20,2,20,0 | | 3,21,21,0 | | 3.21,21,0 |
| | | 20,2,20,0 | | 20,2,20,0 | | 21,21,3,0 |
| 3^{rd} loop | E-F | 21,3,21,0 | E-F | 21,3,21,1* | E-F | 21,3,21,1 |
| | | 21,3,21,1* | | 3,21,21,1 | | 3,21,21,1 |
| | | 21,21,3,0 | | 21,21,3,0 | | 21,21,3,1* |
| | F-G | 22,13,31,0 | F-H | 31,4,31,0F | F-K | 31,13,22,0F |
| | | 4, 31,31,0F | | 13.22,31,0 | | 13,31,22,0 |
| | | 22,31,13,0 | | 31,22,13,0 | | 31,31,4,0F |
| 4^{th} loop | F-K | 31,13,22,0F | | | F-G | 22,13,31,0F |
| | | 13,31,22,1* | | | | 4, 31,31,0F |
| | | 31,31,4,0F | | | | 22,31,13,1* |
| | K-Z | - | | | G-Z | - |
| | | 23,41,23,0 | | | | - |
| | | - | | | | 23,41,23,0 |

For the fourth loop after the last line of the third loop in table 2 the result is outlined in the following. An optimization for optical reach would verify the links A-C, A-D, C-E and D-E and results in no better path for optical reach to node F. An optimization for cost would verify the links A-B, A-D, B-E, D-E and results in no better path for cost to node F. An optimization for latency would verify the links A-B, A-C, B-E and C-E and results in no better path for latency to node F. At this point there is a best optical reach, a best latency and a best latency route to get to node F. Subsequent routes for optimization fails: F-G optical reach optimize failed due to latency; F-K latency optimized failed due to optical reach; F-H fails for any route either due to optical reach or latency. The next and last potential routes take the result from latency optimized route A-D-E-F and continue on F-G, and take the optical reach optimized route A-B-E-F and continue on F-K. Consequently, only two potential links to follow: F-G for latency optimized and F-K for optical reach optimized. Two potential paths are determined: path 210 according to A-D-E-F-G-Z and a further path A-B-E-F-K-Z. As the cost vector is the same for both paths one of them has to be chosen.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method to operate a communication network, wherein a first node (A) is connected via a plurality of intermediate nodes (B-E) with a second node (Z), comprising the steps of:
- determining in a first determination step (222; 1-19, 46-12) an open path (224; A-C) starting with the first node (A) as a source node, wherein the open path (224; A-C) does not comprise the second node (Z) as a destination node, and wherein a first constraint terminates the open path (224; A-C) without reaching the second node (Z);
- determining in a further determination step (20-45) after the first determination step (212) and before a second determination step (214) a further open path (F-M; F-L) with an intermediate node (F) on the open path (A-B-F) determined in the first determination step (2012) as a source node;
- determining in the second determination step (226; 20-45) a reaching path (228; C-Z) starting with one of the intermediate nodes (C) in the open path (224; A-C) as a source node, wherein the reaching path (228; C-Z) comprises the second node (Z) as a destination node, wherein the further determination step (20-45) as a repetition and/or the second determination step (226) is conducted with a dedicated intermediate node (3Rnode) in the preceding open path (224) as a source node,
- relaxing (27) the first constraint to a second constraint at the dedicated intermediate node (3Rnode), and
- starting in the second determination step (20-45; 214) with one of the intermediate nodes (F) in the further open path (F-M; F-L) as a source node.

2. The method according to claim 1, further comprising:
determining a communication path (220) from the first node (A) to the second node (Z) along intermediate nodes (B-E) on the open path (224) and on the reaching path (228), and
transferring payload data from the first node (A) to the second node (Z) along the communication path (220) .

3. The method according to the preceding claim, wherein the further determination step (20-45) is repeated in a recursive fashion for each open path (224), wherein each repetition determines a respective further open path (224) until determining the reaching path (228).

4. The method according to one of the preceding claims, wherein the first and/or second and/or further determination step (222; 226; 20-45) constitutes an instance of the same function (route), respectively.

5. The method according to claim 1, wherein the second node (Z) is reached via the further open path (224) and/or via the reaching path (228) within the second constraint starting with the dedicated intermediate node (3Rnode) as a source node.

6. The method according to one of the claim 1, wherein the dedicated intermediate node (3Rnode) is a 3R node, and wherein the communication network is an optical communication network.

7. The method according to one of the preceding claims, wherein a first communication layer (L2) of the communication network comprises the first open path (224), wherein a second communication layer (L1) comprises the further open path (224) or the reaching path (228), wherein the dedicated node (A-G; Z) provides a transition from the first communication layer (L2) to the second communication layer (L1), and/or the dedicated node (A-G; Z) offers a transition from the second communication layer (L1) to the first communication layer (L2).

8. The method of claim 7, wherein the second communication layer (L2; L1; L0) is a server layer of the first layer (L3; L2; L1), and wherein the first layer (L3; L2; L1) and/or the second layer (L2; L1; L0) is a layer according to the OSI/ISO model.

9. The method according to one of the preceding claims, wherein the open path (224) and/or the further open path (224) and/or the reaching path (228) is determined according to Dijkstra's shortest path algorithm incorporating at least one constraint.

10. The method according to one of the preceding claims comprising the steps:
I) selecting (1; 10-19) a working node (last_P) and continue with step II);
II) calculating (22-29) the further open path (224) or the reaching path (228) with the working node (last _P) as a source node if (20) the working node (last_P) is a dedicated node (3Rnode) and continue with step III),
III) execute (30) for each node (o) the following steps V) and VI) if at least one of the conditions IIIa) and IIIb) are met,
IIIa) the visited node (o) is marked tentatively,
IIIb) the current best cost (D[o].weight) according to the metric (weight) from the visited node (o) to the first node (from) is greater than (33, 34) the sum of the cost (D[last_P].weight) according to the metric (weight) from the working node (last _P) to the first node (from) and the cost (result[o].weight) according to the metric (weight) through the further path (&r_pred) from the visited node (o) to the working node (last_P); and
IV) store (36-40) the cost (D[o].weight; D[o].budget) of the metric (weight; budget; wavelength) for the visited node (o) as a sum of the cost (D[last_P].weight; D[last_P].budget) from the working node (last_P) to the first node (from) and the cost (result[o].weight; result[o].budget) from the visited node (o) to the working node (last_P);
V) storing (41) the working node (last_P) as a predecessor for the visited node (o) and storing (42) the further path (r_pred) for the respective adjacent node (o).

11. A network node configured to execute the method according to one of the preceding claims.

## Patentansprüche

1. Verfahren zum Betreiben eines Kommunikationsnetzes, wobei ein erster Knoten (A) über mehrere Zwischenknoten (B-E) mit einem zweiten Knoten (Z) verbunden ist, umfassend die Schritte:
- Bestimmen in einem ersten Bestimmungsschritt (222; 1-19, 46-12) eines offenen Pfades (224; A-C), der mit dem ersten Knoten (A) als Quellknoten beginnt, wobei der offene Pfad (224; A-C) den zweiten Knoten (Z) als Zielknoten nicht umfasst, und wobei eine erste Einschränkung den offenen Pfad (224; A-C) beendet, ohne den zweiten Knoten (Z) zu erreichen;
- Bestimmen in einem weiteren Bestimmungsschritt (20-45) nach dem ersten Bestimmungsschritt (212) und vor einem zweiten Bestimmungsschritt (214) eines weiteren offenen Pfades (F-M; F-L) mit einem Zwischenknoten (F) auf dem im ersten Bestimmungsschritt (2012) bestimmten offenen Pfad (A-B-F) als Quellknoten;
- Bestimmen in dem zweiten Bestimmungsschritt (226; 20-45)eines Erreichungspfades (228; C-Z), der mit einem der Zwischenknoten (C) im offenen Pfad (224; A-C) als Quellknoten beginnt, wobei der Erreichungspfad (228; C-Z) den zweiten Knoten (Z) als Zielknoten umfasst, wobei der weitere Bestimmungsschritt (20-45) als Wiederholung und/oder der zweite Bestimmungsschritt (226) mit einem dedizierten Zwischenknoten (3Rnode) im vorhergehenden offenen Pfad (224) als Quellknoten durchgeführt wird,
- Relaxen (27) der ersten Einschränkung auf eine zweite Einschränkung an dem speziellen Zwischenknoten (3Rnode), und
- beginnend im zweiten Bestimmungsschritt (20-45; 214) mit einem der Zwischenknoten (F) im weiteren offenen Pfad (F-M; F-L) als Quellknoten.

2. Verfahren nach Anspruch 1, ferner umfassend:
Bestimmen eines Kommunikationspfades (220) vom ersten Knoten (A) zum zweiten Knoten (Z) entlang von Zwischenknoten (B-E) auf dem offenen Pfad (224) und auf dem erreichenden Pfad (228), und
Übertragen von Nutzlastdaten von dem ersten Knoten (A) zu dem zweiten Knoten (Z) entlang des Kommunikationspfades (220).

3. Verfahren nach dem vorhergehenden Anspruch, wobei der weitere Bestimmungsschritt (20-45) für jeden offenen Pfad (224) rekursiv wiederholt wird, wobei jede Wiederholung einen jeweiligen weiteren offenen Pfad (224) bestimmt, bis der erreichende Pfad (228) bestimmt wird.

4. Verfahren nach einem der vorhergehenden Ansprüche, wobei der erste und/oder zweite und/oder weitere Bestimmungsschritt (222; 226; 20-45) jeweils eine Instanz der gleichen Funktion (Route) darstellt.

5. Verfahren nach Anspruch 1, wobei der zweite Knoten (Z) über den weiteren offenen Pfad (224) und/oder über den erreichenden Pfad (228) innerhalb der zweiten Einschränkung erreicht wird, beginnend mit dem dedizierten Zwischenknoten (3Rnode) als Quellknoten.

6. Verfahren nach Anspruch 1, wobei der dedizierte Zwischenknoten (3Rnode) ein 3R-Knoten ist, und wobei das Kommunikationsnetz ein optisches Kommunikationsnetz ist.

7. Verfahren nach einem der vorhergehenden Ansprüche, wobei eine erste Kommunikationsschicht (L2) des Kommunikationsnetzes den ersten offenen Pfad (224) umfasst, wobei eine zweite Kommunikationsschicht (L1) den weiteren offenen Pfad (224) oder den erreichenden Pfad (228) umfasst, wobei der dedizierte Knoten (A-G; Z) einen Übergang von der ersten Kommunikationsschicht (L2) zur zweiten Kommunikationsschicht (L1) bereitstellt, und/oder der dedizierte Knoten (A-G; Z) einen Übergang von der zweiten Kommunikationsschicht (L1) zur ersten Kommunikationsschicht (L2) bietet.

8. Verfahren nach Anspruch 7, wobei die zweite Kommunikationsschicht (L2; L1; L0) eine Serverschicht der ersten Schicht (L3; L2; L1) ist, und wobei die erste Schicht (L3; L2; L1) und/oder die zweite Schicht (L2; L1; L0) eine Schicht gemäß dem OSI/ISO-Modell ist.

9. Verfahren nach einem der vorhergehenden Ansprüche, wobei der offene Pfad (224) und/oder der weitere offene Pfad (224) und/oder der erreichenden Pfad (228) gemäß Dijkstra's kürzestem Pfadalgorithmus mit mindestens einer Einschränkung bestimmt wird.

10. Verfahren nach einem der vorhergehenden Ansprüche, umfassend die Schritte:
I) Auswählen (1; 10-19) eines funktionierenden Knotens (last _P) und Fortfahren mit Schritt II);
II) Berechnen (22-29) des weiteren offenen Pfades (224) oder des erreichenden Pfades (228) mit dem Arbeitsknoten (last_P) als Quellknoten, wenn (20) der Arbeitsknoten (last_P) ein dedizierter Knoten (3Rnode) ist und Fortfahren mit Schritt III),
III) Ausführen (30) der folgenden Schritte V) und VI) für jeden Knoten (o), wenn mindestens eine der Bedingungen IIIa) und IIIb) erfüllt ist,
IIIa) der besuchte Knoten (o) wird vorläufig markiert,
IIIb) die aktuell besten Kosten (D[o].weight) gemäß der Metrik (Gewicht) vom besuchten Knoten (o) zum ersten Knoten (from) ist größer als (33, 34) die Summe aus den Kosten (D[last_P].weight) gemäß der Metrik (Gewicht) vom Arbeitsknoten (last_P) zum ersten Knoten (from) und der Kosten (Ergebnis [o].weight) gemäß der Metrik (Gewicht) über den weiteren Weg (&r_pred) vom besuchten Knoten (o) zum Arbeitsknoten (last_P); und
IV) Speichern (36-40) der Kosten (D[o].weight; D[o].budget) der Metrik (Gewicht; Budget; Wellenlänge) für den besuchten Knoten (o) als Summe der Kosten (D[last_P].weight; D[last_P].budget) vom Arbeitsknoten (last _P) zum ersten Knoten (from) und der Kosten (Ergebnis [o].weight; Ergebnis [o].budget) vom besuchten Knoten (o) zum Arbeitsknoten (last _P);
V) Speichern (41) des Arbeitsknotens (last_P) als Vorgänger für den besuchten Knoten (o) und Speichern (42) des weiteren Pfades (r_pred) für den jeweiligen benachbarten Knoten (o).

11. Ein Netzwerkknoten, der zum Ausführen des Verfahrens nach einem der vorhergehenden Ansprüche ausgelegt ist.

## Revendications

1. Procédé pour faire fonctionner un réseau de communication, dans lequel un premier noeud (A) est connecté, par le biais de noeuds intermédiaires (B-E), à un second noeud (Z), comprenant les étapes :
- de détermination, dans une première étape de détermination (222 ; 1 à 19, 46 à 12), d'un trajet ouvert (224 ; A-C) commençant avec le premier noeud (A) en tant que noeud source, dans lequel le trajet ouvert (224 ; A-C) ne comprend pas le second noeud (Z) en tant que noeud de destination, et dans lequel une première contrainte termine le trajet ouvert (224 ; A-C) sans atteindre le second noeud (Z) ;
- de détermination, dans une étape de détermination supplémentaire (20 à 45) après la première étape de détermination (212) et avant une seconde étape de détermination (214), d'un trajet ouvert supplémentaire (F-M ; F-L) avec un noeud intermédiaire (F) sur le trajet ouvert (A-B-F) déterminé dans la premier étape de détermination (2012) en tant que noeud source ;
- de détermination, dans la seconde étape de détermination (226 ; 20 à 45), d'un trajet à effectuer (228 ; C-Z) commençant avec l'un des noeuds intermédiaires (C) dans le trajet ouvert (224 ; A-C) en tant que noeud source, dans lequel le trajet à effectuer (228 ; C-Z) comprend le second noeud (Z) en tant que noeud de destination, dans lequel l'étape de détermination supplémentaire (20 à 45) en tant que répétition et/ou la seconde étape de détermination (226) sont conduites avec un noeud intermédiaire dédié (3Rnode) dans le précédent trajet ouvert (224) en tant que noeud source,
- de relaxation (27) de la première contrainte à une seconde contrainte au niveau du noeud intermédiaire dédié (3Rnode) et
- de commencement à la seconde étape de détermination (20 à 45 ; 214) avec l'un des noeuds intermédiaires (F) dans le trajet ouvert supplémentaire (F-M ; F-L) en tant que noeud source.

2. Procédé selon la revendication 1, comprenant en outre :
la détermination d'un trajet de communication (220) du premier noeud (A) au second noeud (Z) le long de noeuds intermédiaires (B-E) sur le trajet ouvert (224) et sur le trajet à effectuer (228) et
le transfert de données de charge utile du premier noeud (A) au second noeud (Z) le long du trajet de communication (220).

3. Procédé selon l'une quelconque des revendications précédentes, dans lequel l'étape de détermination supplémentaire (20 à 45) est répétée de manière récursive pour chaque trajet ouvert (224), dans lequel chaque répétition détermine un trajet ouvert supplémentaire respectif (224) jusqu'à la détermination du trajet à effectuer (228).

4. Procédé selon l'une quelconque des revendications précédentes, dans lequel la première et/ou la seconde et/ou une étape de détermination supplémentaire (222 ; 226 ; 20 à 45) constituent une instance de la même fonction (route), respectivement.

5. Procédé selon la revendication 1, dans lequel le second noeud (Z) est atteint par le biais du trajet ouvert supplémentaire (224) et/ou par le biais du trajet à effectuer (228) dans la seconde contrainte commençant avec le noeud intermédiaire dédié (3Rnode) en tant que noeud source.

6. Procédé selon la revendication 1,
dans lequel le noeud intermédiaire dédié (3Rnode) est un noeud 3R et dans lequel le réseau de communication est un réseau de communication optique.

7. Procédé selon l'une quelconque des revendications précédentes, dans lequel une première couche de communication (L2) du réseau de communication comprend le premier trajet ouvert (224), dans lequel une seconde couche de communication (L1) comprend le trajet ouvert supplémentaire (224) ou le trajet à effectuer (228), dans lequel le noeud dédié (A-G ; Z) fournit une transition entre la première couche de communication (L2) et la seconde couche de communication (L1) et/ou le noeud dédié (A-G ; Z) offre une transition entre la seconde couche de communication (L1) et la première couche de communication (L2).

8. Procédé selon la revendication 7, dans lequel la seconde couche de communication (L2 ; L1 ; L0) est une couche de serveur de la première couche (L3 ; L2 ; L1) et dans lequel la première couche (L3 ; L2 ; L1) et/ou la seconde couche (L2 ; L1 ; L0) sont une couche selon le modèle OSI/ISO.

9. Procédé selon l'une quelconque des revendications précédentes, dans lequel le trajet ouvert (224) et/ou le trajet ouvert supplémentaire (224) et/ou le trajet à effectuer (228) sont déterminés selon l'algorithme du trajet le plus court de Dijkstra incorporant au moins une contrainte.

10. Procédé selon l'une quelconque des revendications précédentes, comprenant les étapes :
I) de sélection (1 ; 10 à 19) d'un noeud de travail (last_P) et continuer avec l'étape II) ;
II) de calcul (22 à 29) du trajet ouvert supplémentaire (224) ou du trajet à effectuer (228) avec le noeud de travail (last_P) en tant que noeud source si (20) le noeud de travail (last_P) est un noeud dédié (3Rnode) et continuer avec l'étape III),
III) d'exécution (30) pour chaque noeud (o) des étapes V) et VI) suivantes si au moins l'une des conditions IIIa) et IIIb) sont remplies,
IIIa) le noeud visité (o) est marqué provisoirement,
IIIb) le meilleur coût actuel (D[o].weight) selon la métrique (poids) du noeud visité (o) au premier noeud (from) est supérieur à (33, 34) la somme du coût (D[last_P].weight) selon la métrique (poids) du noeud de travail (last_P) au premier noeud (from) et du coût (result[o].weight) selon la métrique (poids) à travers le trajet supplémentaire (&r_pred) du noeud visité (o) au noeud de travail (last_P) ; et
IV) de stockage (36 à 40) du coût (D[o].weight ; D[o].budget) de la métrique (poids ; budget ; longueur d'onde) pour le noeud visité (o) en tant que somme du coût (D[last_P].weight ; D[last_P].budget) du noeud de travail (last_P) au premier noeud (from) et du coût (result [o] .weight ; result[o] .budget) du noeud visité (o) au noeud de travail (last_P) ;
V) de stockage (41) du noeud de travail (last_P) en tant que prédécesseur du noeud visité (o) et de stockage (42) du trajet supplémentaire (r_pred) pour le noeud adjacent respectif (o).

11. Noeud de réseau configuré pour exécuter le procédé selon l'une des revendications précédentes.
